# EUROPÄISCHE PATENTSCHRIFT

(11) **EP 2 507 008 B1**
(45) Veröffentlichungstag und Bekanntmachung des Hinweises auf die Patenterteilung: **09.10.2013**
(21) Anmeldenummer: 10797993.2
(22) Anmeldetag: 01.12.2010
(51) Int. Cl.: B23K 26/20, B23K 31/02, B23K 31/12, B25J 9/16, G05B 19/41, G05B 19/423, G05B 19/427

(54) **SCHWEISSVORRICHTUNG MIT EINEM KOORDINATEN VON SCHWEISSBAHN-PUNKTEN ERMITTELBAREN UND ÜBERTRAGBAREN GEBER**
WELDING DEVICE HAVING A GENERATOR FOR DETERMINING AND TRANSMITTING CO-ORDINATES OF WELDING LINE POINTS
DISPOSITIF DE SOUDAGE AVEC UN CAPTEUR POUVANT DÉTERMINER ET TRANSMETTRE LES COORDONNÉES DES POINTS DE LA TRAJECTOIRE DE SOUDAGE

(30) Priorität: 01.12.2009 DE 102009056325
(43) Veröffentlichungstag der Anmeldung: 10.10.2012
(73) Patentinhaber: Schunk GmbH&Co.Kg, 78348 Lauffen a.N. (DE)
(72) Erfinder: LEGUIN, Hermann, 88279 Amtzell (DE)
(74) Vertreter: Weiss, Peter
(86) Internationale Anmeldenummer: PCT/EP2010/007282
(87) Internationale Veröffentlichungsnummer: WO 2011/066953

(56) Entgegenhaltungen:
- DE-A1- 4 323 950
- DE-A1- 10 157 895
- US-A- 4 907 169
- US-A- 5 079 491

## Beschreibung

Die Erfindung betrifft eine Schweissvorrichtung nach dem Oberbegriff des Anspruchs 1 und ein Schweissverfahren nach Oberbegriff des Anspruchs 8.

### Stand der Technik

Aus dem Stand der Technik sind Schweissroboter bekannt, welche angelernt werden können. So zeigt die als nächstliegenden Stand der Technik angesehene DE 4 323 950 A1 einen Schweissroboter, dem verschiedene Kurvenpunkte für eine Schweisskurve vorgegeben werden können, wobei der Schweissroboter aus den vorgegebenen Punkten eine Schweisskurve bestimmt, die dann anschliessend verwendet wird, um entlang dieser Schweisskurve eine Schweissnaht zu setzen.

Besonders beim Schweissen von hochfesten Legierungen oder Edelstahl-Legierungen sind teilweise sehr hohe Anforderungen an die Güte der Schweissnähte zu stellen. So muss bei einem Auftragschweissen, mit welchem Werkstück-Beschädigungen ausgebessert werden, exakt geschweisst werden, um das erwünschte Ergebnis erzielen. Bei einer Ausbesserung von grösseren Flächen kommt es zu dem Problem, dass mehrere Kurven von Schweisspunkten oder Schweisskurven gesetzt werden müssen, um den Auftrag wie gewünscht zu erreichen. Eine solche grossflächige Auftragschweissung ist mit dem oben angesprochenen Schweissroboter nur mühsam durchzuführen.

Aus der US 5 079 491 ist ein Roboterkontrollsystem bekannt, einschilesslich eines Roboters, einer Roboterkontrolleinheit zum Kontrollieren der Tätigkeit des Roboters und einer Lernbox zum Anlernen des Roboters über die Roboterkontrolleinrichtung. Dabei wird die Bewegung des Roboters während seiner Tätigkeit über einen Joystick gesteuert.

Des weiteren ist aus der DE 10 2005 060 967 A1 ein Verfahren zum Einrichtung einer Bahnkurve für eine Robotereinrichtung bekannt. Ein Werkstück mit einer zu bearbeitenden Oberfläche wird im Arbeitsbereich der Robotereinrichtung angeordnet. Eine Zeigereinrichtung wird an einer Mehrzahl von Stützpunkten auf der zu bearbeitenden Oberfläche positioniert. Die Koordinaten der Stützpunkte werden durch Erfassen der zugehörigen Koordinaten der Zeigereinrichtung festgelegt. Zwischen jeweils zwei benachbarten Stützpunkten wird automatisch gemäss einem vorbestimmten Algorithmus interpoliert, um die Bahnkurve festzulegen. Die Bahnkurve wird auf die zu bearbeitende Oberfläche projiziert

### Offenbarung der Erfindung

Aufgabe der Erfindung ist es, eine Schweissvorrichtung und ein Schweissverfahren anzugeben, mit welchen die Nachteile des Standes der Technik gelindert oder abgestellt werden können, wobei insbesondere eine schnelle Erstellung von Schweisskurven, mit denen insbesondere auch grössere Flächen Im Auftragschweissverfahren behandelt werden können, ermöglicht werden sollen.

Die Aufgabe wird mit einer Schweissvorrichtung nach dem Anspruch 1 und einem Schweissverfahren nach dem Anspruch 8 gelöst.

Aufgenommen werden durch den Geber vor allem die Koordinaten der entsprechenden Punkte. Hierzu befindet sich an der Schweissvorrichtung das Binokular, mit welchem die Oberfläche des zu bearbeitenden Werkstücks beobachtet wird. In dem Binokular ist ein Fadenkreuz vorgesehen, mit dem die gewünschten Punkte angefahren werden. Das Fadenkreuz ist wiederum mit dem Koordinatenrechner verbunden. Sobald der gewünschte Punkt angefahren ist, können durch Knopfdruck auf beispielsweise einen entsprechenden Joystick, der auch das Anfahren des gewünschten Punktes vereinfacht, die Koordinaten dieses Punkte gespeichert werden.

Die erfindungsgemässe Schweissvorrichtung umfasst einen Manipulator, welcher eine Schweisseinrichtung trägt. Vorzugsweise ist die Schweisseinrichtung ein Schweisslaser. Weitere bevorzugte Ausführungsformen umfassen eine Laserpistole, ein Lichtbogenschweissgerät, ggf. mit Schutzgaseinrichtung, ein elektrisches Schweissgerät oder ein Schweissgerät mit offener Flamme, bspw. mit Gas als Brennstoff. Im Folgenden wird bevorzugt ein Schweisslaser als Schweisseinrichtung beschrieben; ohne ausdrücklichen Hinweis ist dabei mit dem Wort "Schweisseinrichtung" jedoch immer grundsätzlich allgemein eine Schweisseinrichtung offenbart. Dies gilt auch für die Beschreibung des bevorzugten Ausführungsbeispiels. Es ist anzumerken, dass der Manipulator einen Kopf aufweist, an dem entweder der vollständige Schweisslaser oder bevorzugt ein Austrittsende eines Lichtleiters eines anderweitig angeordneten Schweisslasers angeordnet ist. Dies bietet den Vortell, dass der Kopf kleiner gestaltet werden kann. Die Schweissvorrichtung umfasst eine Steuereinrichtung, mit welcher der Manipulator und der Schweisslaser steuerbar sind.

Ein Geber ist mit der Steuereinrichtung verbunden und dazu geeignet, Punkte vorzugeben, wobei die Steuereinrichtung wiederum dazu eingerichtet ist, eine Schweisskurve auf Grundlage der Punkte zu bestimmen. Für die Bestimmung einer linearen Schweissbahn genügen zwei Punkte, in der Regel dürfte jedoch eine Schweisskurve aus mehreren Kurvenpunkten zu bestimmen sein.

Vorzugsweise ist die Steuereinrichtung steuerbar, um eine lineare Interpolation zwischen den Kurvenpunkten vorzunehmen, eine Ausgleichskurve oder eine geglättete Verbindungskurve zwischen den Kurvenpunkten zu errechnen, bsplw. nach dem spline-modus. Die Schwelsskurve selbst ist geometrische betrachtet eine Kurve, die als solche mit dem Schweisslaser "in einem Zug" geschweisst werden kann. Eine weitere Möglichkeit ist, die Schweisskurve in einzelne Schweisspunkte aufzulösen, welche durch den Schweisslaser gesetzt werden. Der Begriff "Kurve" ist dabei in seiner geometrischen Definition zu verstehen, d.h. dass auch Geraden unter den Begriff "Kurve" fallen.

Erfindungsgemäss ist die Steuereinrichtung weiterhin dazu eingerichtet, eine zweite Schweisskurve auf Grundlage der ersten Schweisskurve zu bestimmen. Dies bietet den Vorteil, dass automatisch weitere Schweisskurven erzeugt werden können, ohne dass zahlreiche Punkte neu gesetzt werden müssen. Ausdrücklich mit umfasst von der Erfindung ist das Bestimmen von weiteren, d.h. dritten, vierten usw. Schweisskurven auf Grundlage der ersten Schweisskurve.

Ein weiterer Aspekt der Erfindung betrifft ein Schweissverfahren, das im Anspruch definiert ist. Bevorzugt schneiden sich die erste und die zweite Schweisskurve nicht. Wiederum gilt allgemein das oben Gesagte bezüglich der weiteren Schweisskurven, d.h. dass es nicht nur eine zweite, sondern auch weitere Schweisskurven geben kann, die mit einem erfindungsgemässen Verfahren bestimmt werden.

Vorteilhafterweise wird die zweite Schweisskurve durch eine geometrische Operation aus der ersten Schweisskurve bestimmt. Dies bietet den Vorteil, dass auch ohne grossen Benutzereingriff die zweite Schweisskurve so bestimmt werden kann, dass sie beispielsweise ohne Abstand zwischen den Schweisskurven neben die erste gelegt werden kann. Bevorzugte Ausführungsbeispiele bestimmen eine zweite Schweisskurve so, dass die zweite Schweisskurve nach dem Schweissen unmittelbar neben der ersten Schweisskurve liegt. Bevorzugte geometrische Operationen zur Bestimmung der zweiten Schweisskurve aus der ersten Schweisskurve sind eine zentrische Streckung, eine Verschiebung oder eine Spiegelung der ersten Schweisskurve. Vorzugsweise wird zumindest ein Kurvenpunkt der zweiten Schweisskurve vorgegeben und in Abhängigkeit der Lage dieses Kurvenpunkts der zweiten Schweisskurve und in Abhängigkeit der ersten Schweisskurve die zweite Schweisskurve bestimmt. So ist es bevorzugt möglich, einen Punkt der ersten Schweisskurve zu bestimmen, welcher nachfolgend für die zweite Schweisskurve abseits der ersten Schweisskurve gesetzt wird. Durch Verschieben der ersten Schweisskurve so, dass der entsprechende Kurvenpunkt der ersten Schweisskurve auf dem neu gesetzten Kurvenpunkt der zweiten Schweisskurve zu liegen kommt, wird auf einfache Weise die zweite Schweisskurve bestimmt. Weitere bevorzugte Ausführungsformen sind dazu eingerichtet, entlang einer Erzeugenden-Gerade, die vorzugsweise senkrecht auf der ersten Schweisskurve steht, eine Mehrzahl von weiteren, auf der Erzeugenden-Gerade äquidistant beabstandeten Schweisskurven zu erzeugen. Dies bietet den Vorteil, dass grosse Flächen, die auch gekrümmt sein können, einfach und schnell mit einer Schar von Schweisskurven belegt werden können.

Bevorzugt wird auch der oder werden auch die Kurvenpunkte der zweiten Schweisskurve oder eine Erzeugenden-Gerade, welche zur Ermittlung der zweiten Schweisskurve aus der ersten Schweisskurve benötigt werden, durch den Handsteuergeber zumindest teilweise vorgegeben. So kann durch den Handsteuergeber bevorzugt auch eine Gerade festgelegt werden, entlang der die Schweissvorrichtung oder das Schweissverfahren weitere Schweisskurven mit äquidistantem Abstand zueinander und durch Parallelverschieben oder Streckung aus der ersten Schweisskurve entwickelt. Dies bietet den Vorteil, dass grosse Flächen mit einfachen Befehlen über den Handsteuergeber geschweisst werden können oder im Auftragschweissverfahren aufgetragen werden können.

Vorzugsweise umfasst die Schweissvorrichtung einen Scanner, welcher an dem Manipulator oder an dem Manipulatorkopf angeordnet ist, wobei der Scanner mit der Steuereinrichtung verbunden ist und wobei die Steuereinrichtung eingerichtet ist, um die erste oder die zweite Schweisskurve in Abhängigkeit eines Ausgangssignals des Scanners zu bestimmen. Ausdrücklich umfasst sind bevorzugte Ausführungsformen, bei welchen der Scanner und die Steuereinrichtung dazu eingerichtet sind, automatisch eine Mehrzahl Schweisskurven zu bestimmen, um eine durch Kurvenpunkte, welche mit dem Geber vorgegeben werden, definierte Teilfläche einer Oberfläche eines zu bearbeitenden Werkstücks mit der Mehrzahl Schweisskurven auszufüllen. Die Teilfläche kann eine Kurve oder eine zweidimensionale Fläche sein. Zweidimensional bezieht sich dabei auf ein Oberflächen-Koordinatensystem, das krummlinig sein kann. Eine solche automatische Bestimmung ermöglicht eine besonders schnelle Vorgabe für einen automatisierten Schweissvorgang. Verfahrensmässig wird bevorzugt, dass ein Ausgangssignal des Scanners verwendet wird, um eine Ebene für die erste oder die zweite Schweisskurve zu bestimmen, wobei die zweite Schweisskurve vorzugsweise in dieser Ebene bestimmt wird. Dies bietet den Vorteil, dass ein Parallelverschieben der Schweisskurve auch bei schief liegenden zu schweissenden Ebenen einfach und zuverlässig möglich ist, da mit dem Scanner eine zusätzliche Informationsquelle für die Oberfläche des zu schweissenden Materials vorhanden ist. Es sollte angemerkt werden, dass die Steuereinrichtung sich auf mehr als einen Rechner verteilen kann.

Typische Ausführungsformen der Erfindung benutzen die vorgegebenen Kurvenpunkte, um eine Ebene zu bestimmen. Die Bestimmung der Ebene ist vorteilhaft, da auf diese Weise zuverlässig beispielsweise eine Parallelverschiebung oder Streckung der ersten Schweisskurve, um die zweite Schweisskurve zu erhalten, möglich ist. Bei bevorzugten Ausführungsformen der Erfindung werden sowohl die Informationen des Scanners als auch Informationen über Ebenen aus den vorgegebenen Kurvenpunkten verwendet, um die Oberfläche des zu schweissenden Materials zu bestimmen. Allgemein wird bevorzugt, dass das Ausgangssignal des Scanners verwendet wird, um eine Oberfläche eines zu schweissenden Materials zu bestimmen. Ebenso ist die Steuereinrichtung eingerichtet, um die zweite Schweisskurve auf der Oberfläche zu bestimmen.

Vorteilhafterweise ist an dem Manipulator oder dem Manipulatorkopf eine Lichtquelle angeordnet, sodass durch die Lichtquelle ein durch den Scanner abtastbarer Bereich ausleuchtbar ist. Dies bietet den Vorteil, dass der Scanner zuverlässiger arbeitet.

Bevorzugte Ausführungsformen der Erfindung weisen einen Speicher auf, welcher mit der Steuereinrichtung verbunden ist. Ein solcher Speicher bietet den Vorteil, dass die erste oder die zweite Schweisskurve gespeichert werden können, um später, beispielsweise bei einem neuen Werkstück, erneut abgerufen werden zu können.

Vorzugsweise ist die Schweissvorrichtung dazu eingerichtet, ein Verfahren in einer der beschriebenen erfindungsgemässen oder bevorzugten Varianten auszuführen.

Bevorzugte Ausführungsformen der Erfindung beherrschen vorzugsweise die folgenden Schritte bei Verwendung eines Handsteuergebers: Auswerten eines Ausgangssignals des Handsteuergebers und Ansteuern des Manipulators, so dass dieser zwischen der ersten und der zweiten Schweisskurve in Abhängigkeit des Ausgangssignals springt. So kann mit dem Handsteuergeber eine einfache Auswahl getroffen werden, auf welcher Kurve anschliessend ein Cursor oder eine Marke für eine Position des Manipulators verfahren wird. Vorzugsweise wird der Manipulator angesteuert, sodass er entlang einer der ersten oder zweiten Schweisskurve verfährt. Allgemein wird als Handsteuergeber ein Handknüppel oder ein "Joystick" bevorzugt. Bei Auswahl einer Richtung, die im Wesentlichen in Richtung einer der Schweisskurven liegt, d.h. eine Richtung, die im Wesentlichen tangential zu einer der beiden Schweisskurven ist, verfährt der Manipulator oder der Manipulatorkopf entlang der jeweiligen Schweisskurve, auf welcher sich der Manipulator oder der Manipulatorkopf gerade befinden. Vorzugsweise werden alle Schritte auf einem Monitor schematisch dabei dargestellt. Dies bietet den Vorteil, dass der Benutzer jeweils darüber im Klaren ist, wo sich der Manipulatorkopf gerade befindet.

Vorrichtungsmässig wird bevorzugt, dass die Schweissvorrichtung einen Monitor aufweist. Bei Auswahl einer Richtung an dem Handsteuergeber, die im Wesentlichen quer zu der Richtung einer der Schweisskurven ist, springt der Manipulator oder der Manipulatorkopf vorzugweise von einer Schweisskurve zu einer anderen der Schweisskurven, d.h. der ersten oder der zweiten oder auch weiterer Schweisskurven. Auf diese Weise kann einfach jeder beliebige Punkt auf jeder beliebigen Schweisskurve angefahren werden.

Vorzugsweise ist die Geschwindigkeit, mit welcher der Manipulator oder der Manipulatorkopf entlang einer der Schweisskurven verfährt, von dem Ausgangssignal des Handsteuergebers abhängig. So wird bevorzugt, dass bei einem stärkeren Ausschlag des Handsteuergebers eine höhere Geschwindigkeit verwendet wird. Auf diese Weise ist es dem Benutzer möglich, einfach Feineinstellungen bezüglich der Position des Kopfes des Manipulators vorzunehmen.

### Kurze Beschreibung der Zeichnungen

Nachfolgend werden bevorzugte Ausführungsbeispiele der Erfindung anhand der beiliegenden Zeichnungen beschrieben, wobei die Zeichnungen zeigen:
- **Fig. 1**: zeigt schematisch Teile einer erfindungsgemässen Schweissvorrichtung; und
- **Fig. 2**: zeigt ein erfindungsgemässes Schweissverfahren in einem schematischen Ablaufdiagramm.

### Beschreibung bevorzugter Ausführungsformen

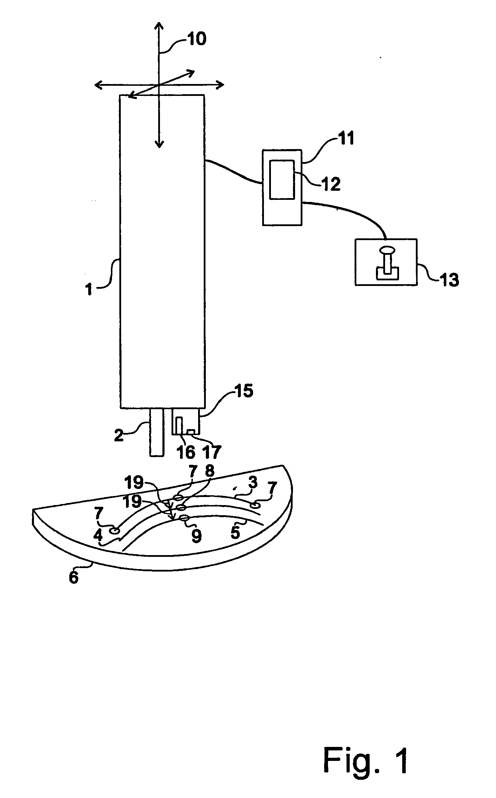

Die Fig. 1 zeigt schematisch eine erfindungsgemässe Schweissvorrichtung mit einem Manipulator 1. Der Manipulator 1 ist in der Fig. 1 extrem schematisiert, wobei lediglich der Kopf des Manipulators dargestellt ist. An dem Manipulator 1 ist ein Ausgang eines Schweisslasers 2 angeordnet. Der Schweisslaser 2 ist eine bevorzugte Variante einer Schweisseinrichtung der Erfindung. Mit dem Schweisslaser 2 lassen sich Schweisspunkte entlang einer ersten Schweissbahn oder hier Schweisskurve 3, einer zweiten Schweisskurve 4 und einer dritten Schweisskurve 5 setzen. Ebenso können die Schweisskurven 3, 4 und 5 mit dem Schweisslaser jeweils am Stück geschweisst werden. Die Schweisskurven 3 bis 5 werden auf einem Werkstück 6 aufgebracht. Zur Vorgabe der Schweisskurven 3 bis 5 wird zunächst die erste Schweisskurve 3 mit Hilfe von Kurvenpunkten 7 vorgegeben. Das Verfahren zur Bestimmung der Schweisskurven 3 bis 5 wird weiter unten ausführlicher erläutert.

Der Manipulator 1 ist in allen drei Raumrichtungen verfahrbar, wie durch Pfeile 10 angedeutet ist. Zur Steuerung des Manipulators 1 ist eine Steuereinrichtung 11 vorgesehen, welche über einen Monitor 12 verfügt. An der Steuereinrichtung 11 ist ein Handsteuergeber 13 in Form eines Joysticks angeschlossen. Mit dem Handsteuergeber können Befehle an die Steuereinrichtung 11 gegeben werden und die Kurvenpunkte 7, 8 und 9 gesetzt werden.

Weiterhin sind an dem Manipulator Teile eines Scanners 15 angeordnet, wobei der Scanner eine Lichtquelle 16 und einen CCD-Sensor 17 umfasst. Mit dem Scanner 15 lässt sich die Oberfläche des Werkstücks 6 erfassen und an die Steuereinrichtung 11 weitergeben.

Aus den Informationen des Scanners 15 und der Lage der Kurvenpunkte 7 bestimmt die Steuereinrichtung 11 die erste Schweisskurve 3. Anschliessend ist es einem Benutzer möglich, einen Bezugs-Kurvenpunkt 8 der zweiten Schweisskurve 4 vorzugeben. Dieser Bezugs-Kurvenpunkt 8 entspricht einem der Kurvenpunkte 7 der ersten Schweisskurve 3. Die Steuereinrichtung 11 ermittelt sodann aus diesen Informationen die Lage der zweiten Schweisskurve 4, indem sie die erste Schweisskurve 3 in den Bezugs-Kurvenpunkt 8 parallel verschiebt. Analog ermittelt die Steuereinrichtung die dritte Schweisskurve 5 durch Parallelverschieben der ersten Schweisskurve 3 in einen Bezugs-Kurvenpunkt 9 der dritten Schweisskurve 5. Das Parallelverschieben ist durch Pfeile 19 angedeutet.

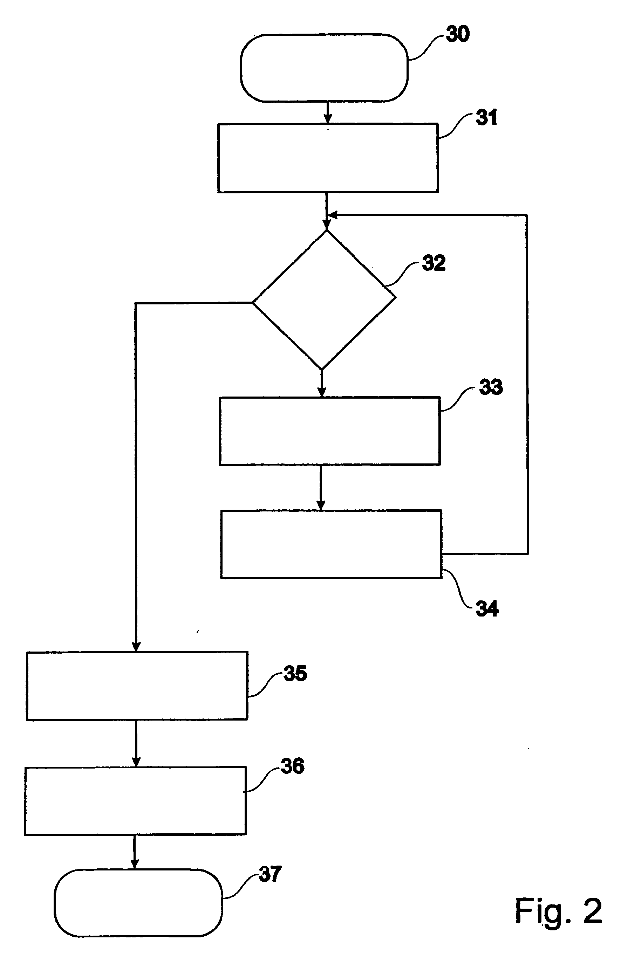

In der Fig. 2 ist ein erfindungsgemässes Verfahren dargestellt, wobei auf die Beschreibung der Fig. 1 Bezug genommen wird. Das Verfahren startet mit einem Schritt 30. Anschliessend werden in einem Schritt 31 durch einen Benutzer über den Handsteuergeber 13 drei Kurvenpunkte 7 für die erste Schweisskurve 3 vorgegeben. Für die Vorgabe von Kurvenpunkten ist gemäß der Erfindung gedacht, die Oberfläche des Werkstückes 6 mit einem Binokular zu beobachten, welches ein Fadenkreuz aufweist. Dieses Fadenkreuz ist mit einer entsprechenden Koordinatenspeichereinheit verbunden. Sobald der gewünschte Kurvenpunkt 7 angefahren ist, können per Knopfdruck die Koordinaten dieses Punktes in der Steuereinrichtung 11 gespeichert werden. Ferner ist es auch möglich, die Kurvenpunkte mit einem sichtbaren Hilfslaser anzufahren und die Koordinaten abzuspeichern. Selbst ein manuelles Anfahren der gewünschten Kurvenpunkte mit einem Stift wäre denkbar. Hier liegen zahlreiche Möglichkeiten im Rahmen der Erfindung

Bereits jetzt oder auch zu einem späteren Zeitpunkt ist es möglich, die gespeicherten Kurvenpunkte zur Ermittlung einer geeigneten Schweisskurve zu verwenden: Dieses Abgleichen kann bevorzugt nach dem Spline-Modus erfolgen. Hierdurch lassen sich anhand mehrerer Kurvenpunkte harmonische Kurven erzeugen. Der Spline-Modus gestattet es auch, nachträglich Kurvenpunkte zu verschieben bzw. neue hinzuzufügen, was durch einfachen Mouseclick erfolgt. Durch Drücken der Mousetaste und Festhalten können Kurvenpunkte verschoben werden.

Anschliessend besteht in einem Schritt 32 in Möglichkeit zu entscheiden, ob weitere Kurven auf Grundlage der ersten Schweisskurve 3 gesetzt werden sollen. Ist die Antwort in dem Schritt 32 ein Ja, springt das Verfahren zu einem Schritt 33, in welchem ein Bezugs-Kurvenpunkt 8 für die zweite Schweisskurve 4 gesetzt werden kann. Dabei kann durch den Benutzer auch der vektorielle Abstand 19, d.h. die Länge des Pfeils 19 für die Parallelverschiebung der ersten Schweisskurve zur Bildung der zweiten Schweisskurve 4, vorgegeben werden. In einem Schritt 34 wird dann die zweite Schweisskurve 4 ermittelt.

Anschliessend springt das Verfahren wieder zu dem Entscheidungsschritt 32 zurück, in welchem wiederum abgefragt wird, ob eine weitere Schweisskurve eingegeben werden soll. In dem dargestellten Fall der Fig. 1 würde noch die dritte Schweisskurve 5 mit dem Bezugs-Kurvenpunkt 9 vorgegeben werden. Sind alle Schweisskurven auf diese Weise ermittelt, springt das Verfahren nach dem Entscheidungsschritt 32 zu einem Schritt 35, in welchem dann die einzelnen Schweisskurven 3 bis 5 exakt ermittelt bzw. nach dem Spline-Modus errechnet und in Steuerbefehle für den Manipulator und den Schweisslaser umgesetzt werden. Hierzu wird auch der Scanner 15 abgefragt, um die Lage der Oberfläche des Werkstücks 6 zu bestimmen. Hintergrund ist, dass bei der Parallelverschiebung der Schweisskurven zum Erhalt der zweiten Schweisskurve 4 und der dritten Schweisskurve 5 genaue Informationen über die Oberfläche des Werkstücks 6 vorliegen müssen. Zu berücksichtigen ist, dass die Schweisskurven 3 bis 5 bei einer welligen oder anderweitig nicht ebenen Ausgestaltung der Oberfläche des Werkstücks 6 dreidimensionale Kurven sind. Die Berücksichtigung dieser Tatsache ist entscheidend für ein ordnungsgemässes Durchführen des Schweissvorgangs.

Anschliessend werden in einem Schritt 36 die Schweisspunkte auf den Schweisskurven 3 bis 5 gesetzt oder es werden entsprechende Bahnen durchgängig geschweisst. Das Verfahren endet anschliessend mit dem Schritt 37.

Der Scanner 15 dient vor allem dazu, eine Oberfläche des Werkstücks 6 aufzunehmen und zu digitalisieren. In diese dreidimensionale Oberfläche können dann die Schweisskurven hineingelegt und er Oberfläche angepasst werden. Auch hier ist es nun möglich, mit dem Joystick von Bahn zu Bahn zu springen, beispielsweise um die Schweisskurven zu korrigieren oder der Oberfläche besser anzupassen.

Bei Verwendung des erfindungsgemässen Schweissverfahrens ist darauf hinzuweisen, dass nach dem Durchlaufen des Verfahrens der Fig. 2 ein neues, jedoch äusserlich identisches Werkstück in die Schweissvorrichtung eingelegt werden kann, um anschliessend behandelt zu werden. Dabei ist es aufgrund des vorhandenen Scanners 15 nicht wichtig, dass das Werkstück 6 exakt dieselbe Position aufweist. Vielmehr kann mit dem Scanner 15 die Oberfläche des Werkstücks neu erfasst werden.

Sollte jetzt die Oberfläche des Werkstücks von der Oberfläche des voranbearbeiteten Werkstücks abweisen, so besteht die Möglichkeit, dass die gewünschte Schweisskurven-Schar dieser Abweichung nachgefahren wird. D.h., die Schwesskurven-Schar befindet sich im gleichen Bereich der Oberfläche des neuen Werkstücks, wie beim vorangegangenen Werkstück, obwohl das neue Werkstück eine andere Position aufweist.

Weiterhin kann für die gesamte Schweisskurven-Schar 3 bis 5 auch durch Vorgabe eines einzelnen neuen Bezugs-Kurvenpunktes auf dem Werkstück 6 die Möglichkeit geschaffen werden, dass durch die Vorgabe dieses lediglich einen Punktes die gesamte Schweisskurven-Schar 3 bis 5 auf dem neuen Werkstück definiert wird. Auf diese Weise ist es möglich, viele Werkstücke sehr exakt, beispielsweise im Auftragschweissverfahren, zu bearbeiten.

## Patentansprüche

1. Schweissvorrichtung zum Bearbeiten eines Werkstücks (6) mit
- einem Manipulator (1),
- einer an dem Manipulator (1) angeordneten Schweisseinrichtung (2),
- einer Steuereinrichtung (11), die mit dem Manipulator (1) und der Schweisseinrichtung (2) verbunden ist, und
- einem mit der Steuereinrichtung (11) verbundenen Geber (13)
**dadurch gekennzeichnet,**
**dass** mittels des Gebers (13) Koordinaten von Punkten (7) der Schwelssbahn (3) auf dem Werkstück (6) ermittelbar und an die Steuereinrichtung (11) übertragbar sind, wobei die Steuereinrichtung eingerichtet ist, um eine erste Schweissbahn (3) auf Grundlage der Punkte (7) zu bestimmen,
**dass** der Geber ein Binokular ist, in dem ein Fadenkreuz zum Anfahren der gewünschten Punkte vorgesehen ist und der mit einem Koordinatenrechner der Steuereinrichtung verbunden ist.

2. Schweissvorrichtung nach Anspruch 1, **dadurch gekennzeichnet, dass** die Steuereinrichtung (11) einen Modus zum Erzeugen von harmonischen Schweissbahnen (3) beinhaltet.

3. Schweissvorrichtung nach Anspruch 1 oder 2, **dadurch gekennzeichnet, dass** die Steuereinrichtung (11) eingerichtet ist zum Bestimmen einer zweiten Schweissbahn (4) auf Grundlage der ersten Schweissbahn (3).

4. Schweissvorrichtung nach wenigstens einem der Ansprüche 1 bis 3, **dadurch gekennzeichnet, dass** der Geber einen Joystick (13) umfasst zum Aufnehmen der Punkte (7) durch einen Benutzer und zum Springen von Bahn zu Bahn.

5. Schweissvorrichtung nach wenigstens einem der Ansprüche 1 oder 4, **gekennzeichnet durch** einen an dem Manipulator angeordneten Scanner (15), der mit der Steuereinrichtung (11) verbunden ist, wobei die Steuereinrichtung (11) eingerichtet ist, die erste Schweissbahn (3) und/oder die nächsten Schweissbahnen (4, 5) in Abhängigkeit eines Ausgangssignals des Scanners (15) zu bestimmen.

6. Schweissvorrichtung nach Anspruch 5, **gekennzeichnet durch** eine an dem Manipulatorkopf angeordnete Lichtquelle (16), die angeordnet ist, so dass durch die Lichtquelle (16) ein **durch** den Scanner (15) abtastbarer Bereich ausleuchtbar ist.

7. Schweissvorrichtung nach einem der vorhergehenden Ansprüche, **gekennzeichnet durch** einen mit der Steuereinrichtung verbunden Speicher zum Abspeichem von zumindest einer der Schweissbahnen (3, 4, 5).

8. Schweissverfahren mit den Schritten:
- Anfahren von zumindest zwei Punkten (7) einer gewünschten Schweissbahn (3) mit einem Koordinatengeber; **gekennzeichnet durch** folgende Schritte:
- Bestimmen einer ersten Schweissbahn (3) auf der Grundlage der zumindest zwei aufgenommenen Punkten (7) mittels einem Fadenkreuz eines Binokulars, mit dem die gewünschten Punkte angefahren und deren Koordinaten aufgenommen werden und
- Schweissen entlang der ersten Schweissbahn (3) mittels einer an einem Manipulator (1) angeordneten Schweisseinrichtung (2).

9. Schweissverfahren nach Anspruch 8, **gekennzeichnet durch** Bestimmen einer zweiten Schweissbahn (4) auf Grundlage der ersten Schweissbahn (3) und Schweissen entlang der zweiten Schwelssbahn (4).

10. Schweissverfahren nach Anspruch 9, **dadurch gekennzeichnet, dass** die zweite Schweissbahn (4) durch eine geometrische Operation aus der ersten Schweissbahn (3) bestimmt wird.

11. Schweissverfahren nach Anspruch 9 oder 10, **dadurch gekennzeichnet, dass** die zweite Schwelssbahn (4) durch eine zentrische Streckung, eine Verschiebung und/oder eine Spiegelung aus der ersten Schweissbahn (3) bestimmt wird.

12. Schweissverfahren nach wenigstens einem der Ansprüche 8 bis 11, **dadurch gekennzeichnet, dass** mit dem Koordinatengeber (13) innerhalb der Schweissbahn (3, 4, 5) oder von Schweissbahn (3) zu Schweissbahn (4, 5) gesprungen und die Schweissbahn (3, 4, 5) verändert wird.

13. Schweissverfahren nach einem der Ansprüche 8 bis 12, **dadurch gekennzeichnet, dass** ein Ausgangssignal eines an dem Manipulator (1) angeordneten Scanners (15) verwendet wird, um eine Ebene für die erste Schweissbahn (3) und/oder die zweite Schweissbahn (4) zu bestimmen.

14. Schweissverfahren nach einem der Ansprüche 8 bis 13, **gekennzeichnet durch** einen handsteuerbaren Koordinatengeber.

15. Schweissverfahren nach einem der Ansprüche 8 bis 14, **gekennzeichnet durch**
- Auslesen eines Ausgangssignals (Koordinaten) eines I landsteuergebers (13) (Joystick) und
- Ansteuern des Manipulators (11), so dass er zwischen der ersten Schweisskurve (3) und der zweiten Schweisskurve (4) in Abhängigkeit des Ausgangssignals springt und/oder
- Ansteuern des Manipulators (1), so dass er entlang der ersten Schweisskurve (3) oder der zweiten Schweisskurve (4) verfährt.

16. Schweissverfahren nach Anspruch 15, **gekennzeichnet durch** Verfahren des Manipulators (1) entlang der ersten Schweisskurve (3) oder der zweiten Schweisskurve (4) mit einer Geschwindigkeit in Abhängigkeit eines Ausgangssignals des Handsteuergebers (13).

## Claims

1. Welding apparatus for processing a workpiece (6) having
- a manipulator (1),
- a welding device (2) arranged on the manipulator (1),
- a control device (11) connected to the manipulator (1) and to the welding device (2), and
- a transmitter (13) connected to the control device (11)
**characterised**
**in that** coordinates of points (7) of the welding path (3) on the workpiece (6) are determinable and transmittable to the control device (11) by means of the transmitter (13), the control device being adapted to determine a first welding path (3) on the basis of the points (7),
**in that** the transmitter is a binocular in which a graticule for moving to the desired points is provided and which is connected to a coordinate computer of the control device.

2. Welding apparatus according to Claim 1, **characterised in that** the control device (11) comprises a mode for generating harmonic welding paths (3).

3. Welding apparatus according to Claim 1 or 2, **characterised in that** the control device (11) is adapted to determine a second welding path (4) on the basis of the first welding path (3).

4. Welding apparatus according to at least one of Claims 1 to 3, **characterised in that** the transmitter comprises a joystick (13) for recording the points (7) by a user and for jumping from path to path.

5. Welding apparatus according to at least one of Claims 1 or 4, **characterised by** a scanner (15) arranged on the manipulator and connected to the control device (11), the control device (11) being adapted to determine the first welding path (3) and/or the next welding paths (4, 5) in dependence on an output signal of the scanner (15).

6. Welding apparatus according to Claim 5, **characterised by** a light source (16) which is arranged on the manipulator head and is arranged so that a region scannable by the scanner (15) is illuminatable by the light source (16).

7. Welding apparatus according to one of the preceding claims, **characterised by** a memory connected to the control device and serving to store at least one of the welding paths (3, 4, 5) .

8. Welding method having the steps:
- moving to at least two points (7) of a desired welding path (3) using a coordinate transmitter; **characterised by** the following steps:
- determining a first welding path (3) on the basis of the at least two picked-up points (7) by means of a graticule of a binocular, by which the desired points are moved to and their coordinates are recorded and
- welding along the first welding path (3) by means of a welding device (2) arranged on a manipulator (1).

9. Welding method according to Claim 8, **characterised by** determining a second welding path (4) on the basis of the first welding path (3) and welding along the second welding path (4).

10. Welding method according to Claim 9, **characterised in that** the second welding path (4) is determined by a geometrical operation from the first welding path (3).

11. Welding method according to Claim 9 or 10, **characterised in that** the second welding path (4) is determined by a central extension, a displacement and/or a reflection from the first welding path (3).

12. Welding method according to at least one of Claims 8 to 11, **characterised in that** the coordinate transmitter (13) is used to jump within the welding path (3, 4, 5) or from welding path (3) to welding path (4, 5) and to change the welding path (3, 4, 5) .

13. Welding method according to one of Claims 8 to 12, **characterised in that** an output signal of a scanner (15) arranged on the manipulator (1) is used to determine a plane for the first welding path (3) and/or the second welding path (4) .

14. Welding method according to one of Claims 8 to 13, **characterised by** a manually controllable coordinate transmitter.

15. Welding method according to one of Claims 8 to 14, **characterised by**
- reading out an output signal (coordinate) of a manual control transmitter (13) (joystick) and
- driving the manipulator (11), so that it jumps between the first welding curve (3) and the second welding curve (4) in dependence on the output signal and/or
- driving the manipulator (1), so that it moves along the first welding curve (3) or the second welding curve (4) .

16. Welding method according to Claim 15, **characterised by** moving the manipulator (1) along the first welding curve (3) or the second welding curve (4) at a speed dependent upon an output signal of the manual control transmitter (13).

## Revendications

1. Dispositif de soudage pour l'usinage d'une pièce à usiner (6) avec
- un manipulateur (1),
- un moyen de soudage (2) disposé sur le manipulateur (1),
- un moyen de commande (11) qui est relié au manipulateur (1) et au moyen de soudage (2), et
- un capteur (13) relié au moyen de commande (11),
**caractérisé par le fait**
**qu'**au moyen du capteur (13) peuvent être déterminées et transmises au moyen de commande (11) des coordonnées de points (7) de la trajectoire de soudage (3) sur la pièce à usiner (6), le moyen de commande étant aménagé pour déterminer une première trajectoire de soudage (3) sur base des points (7),
**que** le capteur est un binoculaire dans lequel est prévue une réticule pour aborder les points désirés et qui est relié à un calculateur de coordonnées du moyen de commande.

2. Dispositif de soudage selon la revendication 1, **caractérisé par le fait que** le moyen de commande (11) contient un mode de génération de trajectoires de soudage harmoniques (3).

3. Dispositif de soudage selon la revendication 1 ou 2, **caractérisé par le fait que** le moyen de commande (11) est aménagé pour déterminer une deuxième trajectoire de soudage (4) sur base de la première trajectoire de soudage (3).

4. Dispositif de soudage selon au moins l'une des revendications 1 à 3, **caractérisé par le fait que** le capteur comprend un levier (13) pour l'enregistrement des points (7) par un utilisateur et pour sauter d'une trajectoire à l'autre.

5. Dispositif de soudage selon au moins l'une des revendications 1 ou 4, **caractérisé par** un scanner (15) disposé sur le manipulateur et relié au moyen de commande, le moyen de commande (11) étant aménagé pour déterminer la première trajectoire de soudage (3) et/ou les trajectoires de soudage suivantes (4, 5) en fonction d'un signal de sortie du scanner (15).

6. Dispositif de soudage selon la revendication 5, **caractérisé par** une source de lumière (16) disposée sur la tête de manipulateur, laquelle est disposée de sorte que par la source de lumière (16) puisse être illuminée une zone pouvant être balayée par le scanner (15).

7. Dispositif de soudage selon l'une des revendications précédentes, **caractérisé par** une mémoire reliée au moyen de commande et destinée à mémoriser au moins l'une des trajectoires de soudage (3, 4, 5).

8. Procédé de soudage aux étapes consistant à:
- aborder au moins deux points (7) d'une trajectoire de soudage désirée (3) par un capteur de coordonnées;
**caractérisé par** les étapes suivantes consistant à:
- déterminer une première trajectoire de soudage (3) sur base des au moins deux points (7) enregistrés à l'aide d'une réticule d'un binoculaire, par laquelle sont abordés les points désirés et enregistrées leurs coordonnées, et
- souder le long de la première trajectoire de soudage (3) à l'aide d'un moyen de soudage (2) disposé sur un manipulateur (1).

9. Procédé de soudage selon la revendication 8, **caractérisé par** le fait de déterminer une deuxième trajectoire de soudage (4) sur base de la première trajectoire de soudage (3) et souder le long de la deuxième trajectoire de soudage (4).

10. Procédé de soudage selon la revendication 9, **caractérisé par le fait que** la deuxième trajectoire de soudage (4) est déterminée par une opération géométrique à partir de la première trajectoire de soudage (3).

11. Procédé de soudage selon la revendication 9 ou 10, **caractérisé par le fait que** la deuxième trajectoire de soudage (4) est déterminée par un allongement centré, un décalage et/ou une disposition en image-miroir à partir de la première trajectoire de soudage (3).

12. Procédé de soudage selon au moins l'une des revendications 8 à 11, **caractérisé par le fait qu'**il est sauté par le capteur de coordonnées (13) à l'intérieur de la trajectoire de soudage (3, 4, 5) ou d'une trajectoire de soudage (3) à une autre trajectoire de soudage (4, 5) et que la trajectoire de soudage (3, 4, 5) est changée.

13. Procédé de soudage selon l'une des revendications 8 à 12, **caractérisé par le fait qu'**un signal de sortie d'un scanner (15) disposé sur le manipulateur (1) est utilisé pour déterminer un plan pour la première trajectoire de soudage (3) et/ou la deuxième trajectoire de soudage (4).

14. Procédé de soudage selon l'une des revendications 8 à 13, **caractérisé par** un capteur de coordonnées à commande manuelle.

15. Procédé de soudage selon l'une des revendications 8 à 14, **caractérisé par** le fait de
- lire un signal de sortie (coordonnées) d'un capteur à commande manuelle (13) (levier) et
- activer le manipulateur (11) de sorte qu'il saute entre la première courbe de soudure (3) et la deuxième courbe de soudure (4) en fonction du signal de sortie, et/ou
- activer le manipulateur (1) de sorte qu'il se déplace le long de la première courbe de soudure (3) ou de la deuxième courbe de soudure (4).

16. Procédé de soudage selon la revendication 15, **caractérisé par** le fait de déplacer le manipulateur (1) le long de la première courbe de soudage (3) ou de la deuxième courbe de soudage (4) à une vitesse en fonction d'un signal de sortie du capteur à commande manuelle (13).
